**Europäisches Patentamt**

**European Patent Office**

**Office européen des brevets**

(19)

(11) Veröffentlichungsnummer : **0 148 976**
**B1**

(12) **EUROPÄISCHE PATENTSCHRIFT**

(45) Veröffentlichungstag der Patentschrift :
12.11.86

(21) Anmeldenummer : 84106471.0

(22) Anmeldetag : 06.06.84

(51) Int. Cl.⁴ : **F 41 F 19/12**

(54) **Pneumatischer Rohrvorholer für Geschütze.**

(30) Priorität : 01.07.83 DE 3323713

(43) Veröffentlichungstag der Anmeldung :
24.07.85 Patentblatt 85/30

(45) Bekanntmachung des Hinweises auf die Patenterteilung : 12.11.86 Patentblatt 86/46

(84) Benannte Vertragsstaaten :
DE FR GB IT SE

(56) Entgegenhaltungen :
DE-C- 348 321
RHEINMETALL WAFFENTECHNISCHES TASCHEN-BUCH; 5. Auflage, 1980

(73) Patentinhaber : **Rheinmetall GmbH**
**Ulmenstrasse 125 Postfach 6609**
**D-4000 Düsseldorf (DE)**

(72) Erfinder : **Metz, Josef**
**Gillbachstrasse 42**
**D-4040 Neuss (DE)**

(74) Vertreter : **Behrens, Ralf Holger, Dipl.-Phys.**
**in Firma Rheinmetall GmbH Ulmenstrasse 125 Postfach 6609**
**D-4000 Düsseldorf 1 (DE)**

## Beschreibung

Die Erfindung bezieht sich auf einen pneumatischen Rohrvorholer nach dem Oberbegriff des Patentanspruchs 1.

Ein derartiger Rohrvorholer ist unter Bild 879 der Seite 339 des « Waffentechnischen Handbuches » Ausgabe 1973, Firma Rheinmetall GmbH, Düsseldorf als bekannt zu entnehmen. Dieser Rohrvorholer besteht aus einem Vorholzylinder und einem den Vorholzylinder umschließenden Speicherzylinder. Innerhalb des Vorholzylinders ist verschieblich ein mit einer Kolbenstange verbundener Kolben angeordnet, der bei einem gefallenen Schuß eines Geschützes durch das zurücklaufende Rohr das Gas über ein Ventil in den größer dimensionierten Speicherzylinder transportiert. Zur schnellen Entleerung ist der Vorholzylinder an dem nicht vom Kolben verschlossenen Ende mit einem an dem Außenmantel schließenden Rückschlagventil versehen. Der Rohrvorlauf wird durch Entspannung des komprimierten Gases auf den Ausgangsdruck bewirkt. Über eine Konstantdrossel wird dabei der Rohrvorlauf gedämpft. Zur Abdichtung des axial verschieblichen Kolbens und der Kolbenstange dienen Dichtungen, die durch druckbeaufschlagte Schmiermittelkammern geschmiert werden müssen.

Diese Schmiermittelkammern erfordern jedoch einen zusätzlichen Raumbedarf für das Öl- bzw. Fettvolumen, das in relativ kurzen Wartungsintervallen nachgefüllt werden muß, wodurch nicht nur während des Schießbetriebes, sondern auch im Ruhezustand nachteilige Unterbrechungen auftreten können. Zur Kontrolle der Betriebsbereitschaft ist weiterhin eine Druckanzeige des Schmiermittels erforderlich. Aufgrund der relativ kleinen Kolbenfläche des Vorlaufkolbens ist für den Rohrvorlauf ein hohes Druckniveau erforderlich, woraus wandstärkenbedingt ein schwerer Rohrvorholer resultiert und durch den komplizierten Aufbau ein hoher Fertigungsaufwand notwendig ist.

Demgegenüber liegt der Erfindung unter Vermeidung der genannten Nachteile die Aufgabe zugrunde, den Rohrvorholer der im Oberbegriff angegebenen Art dahingehend zu verbessern, daß bei gleichem vorgebbaren Einbauquerschnitt ein einfach aufgebauter und dabei leichter Rohrvorholer mit hoher wartungsarmer Betriebsbereitschaft geschaffen wird.

Gelöst wird diese Aufgabe durch die im kennzeichnenden Teil des Patentanspruches 1 angegebenen Merkmale.

Der pneumatische Vorholzylinder hat erfindungsgemäß den entscheidenden Vorteil, daß er nur einen Zylinder für den Verdrängerraum und den Speicherraum benötigt. Bei einem vergleichsweise gegenüber dem bekannten Vorholzylinder gleichen Einbauquerschnitt ist aufgrund des im Innendurchmesser mit dem Verdrängerraum übereinstimmenden Speicherraumes nur ein vergleichsweise niedriges Druckniveau erforderlich. Daraus resultiert gemeinsam mit der verschieblichen Anordnung des Ventils innerhalb des einzigen Zylinders ein einfacher und besonders gewichtssparender Aufbau, wobei beispielsweise in vorteilhafter Weise die Gewichtsersparnis einem erhöhten Panzerschutz zugute kommen kann.

Vorteilhafte Ausgestaltungen und Weiterbildungen gehen aus den Unteransprüchen hervor.

Eine hohe wartungsarme Betriebsbereitschaft wird bei dem Vorholzylinder dadurch erreicht, daß der Vorholkolben und das Ventil auf den an der Zylinderinnenwand gleitenden Außenflächen neben austauschbaren, reibungsarmen Führungselementen auch verschleiß- und wartungsarme Dichtungselemente enthalten. Das Ventil wird beim Vorlauf im Stegbereich auf einer im Durchmesser kleineren Ringfläche bei einem relativ hohen spezifischen Anpressdruck gegenüber der Buchse und durch die wartungsarme Dichtung im Außenbereich derart gut abgedichtet, daß die Vorlaufgeschwindigkeit ausschließlich über eine Drossel mit konstantem oder variablem Querschnitt kontrolliert steuerbar ist.

Durch den Einsatz einer den Druck des pneumatischen Arbeitsmediums anzeigenden Anzeigevorrichtung, ist vorteilhaft der Betriebszustand des Rohrvorholers zentral ablesbar.

Nach einem weiteren Merkmal der Erfindung ist der Vorholkolben zum Ventil hin versetzt ausgebildet, wodurch eine Reduzierung der Zylinderlänge und dadurch eine weitere Gewichtersparnis des Vorholzylinders erzielt wird.

Die Erfindung wird nachstehend anhand der in den Zeichnungen unter weitgehendem Verzicht auf erfindungsunwesentliche Einzelheiten dargestellten bevorzugten Ausführungsbeispiele des weiteren erläutert :

Es zeigt :

Figur 1 in einem Halbschnitt den Rohrvorholer nach beendigtem Vorlauf, wobei das Ventil eine Drossel mit konstantem Querschnitt enthält ;

Figur 2 den Rohrvorholer entsprechend Fig. 1, jedoch mit einem die Vorlaufgeschwindigkeit beeinflussenden Drosselquerschnitt.

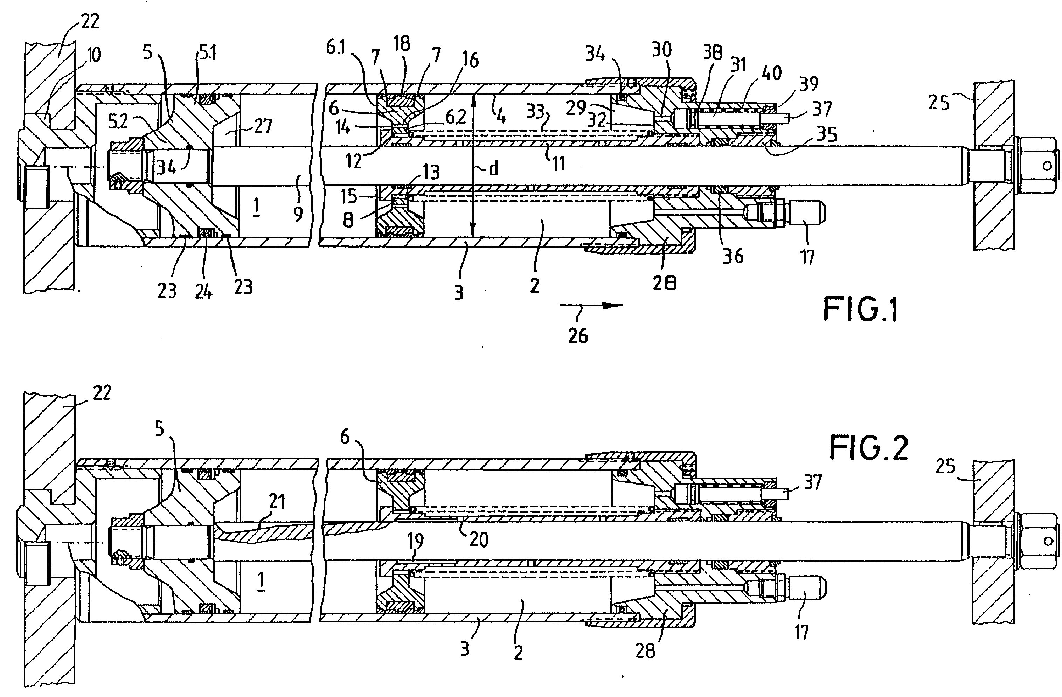

In Fig. 1 ist ein Vorholzylinder dargestellt, dessen Zylinder 3 an seinem vorderen Ende mittels eines Bajonettflansches 10 fest mit einer schematisch angedeuteten Wiege 22 verbunden ist. Innerhalb des Zylinders 3 ist verschiebbar ein auf einer Kolbenstange 9 befestigter Vorholkolben 5 angeordnet. Die durch den hinteren Boden 28 hindurchgehende Kolbenstange 9 ist außerhalb des Zylinders 3 am Waffenverschluß 25 befestigt. Der als dünnwandiges Rohr ausgebildete Mantel des Zylinders 3 enthält eine durchgehende Innenwand 4 mit einem konstanten Durchmesser d. Eine mit dem Boden 28 fest verbundene die Kolbenstange 9 umhüllende, dünnwandige Buchse 11 ragt in den Innenraum des Zylinders 3 hinein und bildet mit einem Ansatz 15 den Sitz 12 eines auf der Innenwand 4 verschiebbar geführten Ventiles 6. Der einerseits zum Vorholkolben 5 und andererseits vom Boden 28 nach außen abgedichtete Innenraum wird durch das Ventil 6 in einen zwischen dem Vorholkolben 5 und Ventil 6 in der Länge veränderbaren Verdrängerraum 1 und in einen Speicherraum 2 unterteilt.

Das Ventil 6 ist scheibenartig ausgebildet und enthält auf dem an der Innenwand 4 anliegenden Bereich 6.1 ein oder mehrere austauschbare, reibungsarme Führungselemente 7 und eine verschleißarme Dichtung 18 sowie im Innenbereich 6.2 ein Schließorgan 8, welches unter dem Druck einer Feder 33 den Speicherraum 2 gegenüber dem Verdrängerraum 1 schließt. Das Schließorgan 8 besteht aus einem nach innen gerichteten den Bereich 6.1 reduzierenden schmalen Steg 13, dessen dem Verdrängerraum 1 zugewandte Seite 14 bei geschlossenem Ventil 6 radial am Sitz 12 der Buchse 11 anliegt. Der Steg 13 des Schließorgans 8 ist mit einer einen konstanten Querschnitt aufweisenden ein- oder mehrfach angeordneten Drosselöffnung 16 versehen, wodurch zur Vorlaufbewegung des Vorlaufkolbens 5 das aus dem Speicherraum 2 in den Verdrängerraum 1 strömende pneumatische Druckmedium drosselbar ist. Zur Erzielung einer kurzen Drosselstrecke können die ein- oder mehrfach angeordneten Drosselöffnungen 16 in einer parallel zur Kolbenstange 9 verlaufenden Richtung innerhalb des Steges 13 zwischen dem Sitz 12 und dem Führungselement 7 angeordnet sein. Durch die Drosselöffnungen 16 und die in Fig. 2 dargestellte Drossel 19, 20, 21 sowie die im Bereich 6.1, 6.2 des Ventiles 6 erfolgte Abdichtung ist es möglich, die Steuerung der Vorlaufgeschwindigkeit ausschließlich über die jeweilige Drossel kontrolliert zu steuern.

Ebenso wie das Ventil 6 ist der an der Innenwand 4 anliegende Bereich 22 des Vorholkolbens 5 mit einem ein- oder mehrfach angeordneten austauschbaren und reibungsarmen Führungsband 23 und einer verschleiß- und wartungsarmen Dichtung 24 versehen, wobei dieser Bereich 5.1 gegenüber dem an der Kolbenstange 9 befestigten Bereich 5.2 zum Ventil 6 hin versetzt ausgebildet ist. Durch eine dadurch gebildete Aussparung 27 des Vorholkolbens 5 ist unter Verkürzung der Länge des Zylinders 3 ein maximaler Hub des zurücklaufenden Waffenverschlusses 25 dadurch möglich, daß das Ventil 6 in zurückgezogener Stellung des Vorholkolbens 5 durch diesen geöffnet ist und die Buchse 11 in Abhängigkeit von der axialen Tiefe der Aussparung 27 den maximalen Hub festlegt.

Der Boden 28 des Speicherraumes 2 ist mit einer das Gewicht reduzierenden Aussparung 29 versehen, dessen Grundfläche 32 eine Bohrung 30 zur Gasdruckbeaufschlagung einer den Betriebsbereitschaft anzeigenden Anzeigevorrichtung 31 enthält. Die Abdichtung des Vorholkolbens 5 zur Kolbenstange 9 und die Abdichtung des Bodens 28 gegenüber dem Zylinder 3 erfolgt in bekannter Weise mittels O-Ringen, während die Abdichtung der beweglichen Kolben 9 vor einer stabilen Führungsbuchse 35 mit einer verschleiß- und wartungsarmen Dichtung 36 versehen ist.

Die verschleiß- und wartungsarmen Dichtungen 18, 24 und 36 enthalten in bekannter Weise eine den jeweiligen Einsatzbedingungen angepaßte Form, wobei die der Gleitfläche des Zylinders 3 oder der Kolbenstange 9 zugewandten Seiten mit einem verschleißfesten reibungsarmen Rücken, versehen sind. Durch den Einsatz von Schmiermitteln bei der Montage wird die reibungsarme Gleitfähigkeit und somit die Standzeit der Dichtungen noch erhöht.

Gemäß Fig. 2 bildet in dem vom Ventil 6 abgewandten Bereich die Buchse 11 und die Kolbenstange 9 gemeinsam einen die Vorlaufgeschwindigkeit des Vorholkolbens 5 beeinflussenden Drosselquerschnitt. Die Kolbenstange 9 ist dabei in der Länge des Verdrängerraumes 2 mit einer zum Vorholkolben 5 hin unterschiedlich abnehmenden Querschnitt 21 versehen, durch den ein die Vorlaufgeschwindigkeit des Vorholkolbens und somit des Waffenverschlusses beeinflussender Drosselquerschnitt zwischen Buchse 11 und Kolbenstange 9 erzielt wird, wobei die Buchse 11 einen zur Kolbenstange 9 hin offenen zylindrischen Hohlraum 19 enthält, der über Radialöffnungen 20 mit dem Speicherraum 2 verbunden ist.

Die Arbeitsweise des pneumatischen Rohrvorholers ist wie folgt : das über ein Gasfüllventil 17 in den Speicherraum 2 und Verdrängerraum 1 gefüllte pneumatische Arbeitsmedium, vorzugsweise Stickstoff, wird durch den mit dem Geschützrohr unter dem Druck der Pulvergase zurücklaufenden Waffenverschluß 25 über den an der Kolbenstange 9 befestigten Vorholkolben 5 komprimiert. Der dabei in Richtung 26 sich bewegende Vorholkolben 5 fördert unter gleichzeitiger Kompression das Arbeitsmedium bei von seinem Sitz 12 abgehobenem Ventil 6 aus dem Verdrängerraum 1 in den Speicherraum 2.

Nach Beendigung des Rücklaufes bewirkt der Druck des komprimierten Arbeitsmediums auf den Vorholkolben 5 den Vorlauf des Waffenverschlusses 25, so daß das Geschützrohr wieder in Schußstellung gelangt. Unter dem Druck der Feder 33 wird dabei das Ventil 6 geschlossen, so daß das Arbeitsmedium unter Entspannung auf dem Arbeitsdruck entweder nur durch die Drosselöffnung 16 oder durch die durch den Querschnitt 21 veränderliche Drosselöffnung 19, 21 aus dem Speicherraum 2 in den Verdrängerraum 1 zur Beaufschlagung des Vorholkolbens treten kann. Durch die über die Länge des Vorlaufs veränderlichen Drosselquerschnitte 19, 21 wird dabei in vorteilhafter Weise bei stark unterschiedlichen Widerstandskräften eine gleichmäßigere Vorlaufgeschwindigkeit erzielt.

Der Betriebszustand des vorzugsweise unter einem niedrigen Gasdruckniveau arbeitenden Rohrvorholers wird durch eine gasdruckbeaufschlagte Anzeigevorrichtung 31 zentral überwacht. Unter dem vorgesehenen Betriebsdruck ragt das Ende 37 eines gasdruckbeaufschlagten Kolbens 38 in einer durch die Schulter 39 begrenzten Endstellung aus der Anzeigevorrichtung 31 heraus. Bei absinkendem Betriebsdruck schiebt sich unter dem Druck der Feder 40 das Ende 37 in die Anzeigevorrichtung 31 hinein, wodurch ein eventueller Verlust des pneumatischen Arbeitsmediums angezeigt wird.

**Patentansprüche**

1. Pneumatischer Rohrvorholer für Geschütze mit einem über eine Kolbenstange (9) mit dem Geschoßrohr verbundenen in einem Verdrängerraum (1) verschiebbar angeordneten Vorholkolben (5), mit einem beim Rohrvorlauf zwischen einem Speicherraum (2) und dem Verdrängerraum (1) angeordneten selbstschließenden Ventil (6) und einer zwischen dem Verdrängerraum (1) und Speicherraum (2) die Vorholgeschwindigkeit bestimmenden Drosseleinrichtung (16 bzw. 19, 20, 21) sowie das pneumatische Druckmedium vor Entweichen schützenden Dichtungsmitteln, dadurch gekennzeichnet, daß der Verdrängerraum (1) und der Speicherraum (2) den gleichen Innendurchmesser (d) aufweisen und innerhalb nur eines Zylinders (3) angeordnet sind, wobei der Vorholkolben (5) und das Ventil (6) verschiebbar auf der Innenwand (4) des Zylinders (3) angeordnet sind.

2. Pneumatischer Rohrvorholer nach Anspruch 1, dadurch gekennzeichnet, daß das Ventil (6) scheibenartig ausgebildet ist und in dem an der Innenwand (4) anliegenden Bereich (6.1) ein oder mehrere austauschbare und reibungsarme Führungselemente (7) und im Innenbereich (6.2) ein Schließorgan (8) enthält, durch welches bei Anlage an einem auf einer zylinderfesten, die Kolbenstange (9) umhüllenden, dünnwandigen Buchse (11) angeordneten Sitz (12) der Speicherraum (2) begrenzt ist.

3. Pneumatischer Rohrvorholer, nach Anspruch 1 und 2, dadurch gekennzeichnet, daß das Schließorgan (8) aus einem nach innen gerichteten den Bereich (6.1) reduzierenden schmalen Steg (13) besteht, dessen dem Verdrängerraum (1) zugewandte Seite (14) radial bei geschlossenem Ventil (6) an einem den Sitz (12) bildenden Ansatz (15) der Buchse (11) anliegt.

4. Pneumatischer Rohrvorholer nach einem der Ansprüche 1 bis 3, dadurch gekennzeichnet, daß zur Erzielung einer die Vorlaufgeschwindigkeit des Vorholkolbens (5) beeinflussenden Drosselquerschnittes die Buchse (11) in dem vom Ventil (6) abgewandten Bereich einen zur Kolbenstange (9) hin offenen zylindrischen Hohlraum (19) enthält, der über Radialöffnungen (20) mit dem Speicherraum (2) verbunden ist und die Kolbenstange (9) in der Länge des Verdrängerraumes (2) einen zum Kolben (17) hin unterschiedlich abnehmenden reduzierten Querschnitt (21) aufweist.

5. Pneumatischer Rohrvorholer nach einem der Ansprüche 1 bis 4, dadurch gekennzeichnet, daß zur ausschließlichen Steuerung der Vorlaufgeschwindigkeit des Vorholkolbens (5) über die Drosseleinrichtung (16 bzw. 19, 20, 21) das Ventil im Bereich (6.1) gegenüber der Innenwand (4) abgedichtet und mit einer verschleißarmen Dichtung (18) versehen ist.

6. Pneumatischer Rohrvorholer nach einem der Ansprüche 1 bis 5, dadurch gekennzeichnet, daß der an der Innenwand (4) anliegende Bereich (22) des Vorholkolbens (5) mit einem ein- oder mehrfach angeordneten austauschbaren und reibungsarmen Führungsband (23) sowie einer verschleiß- und wartungsarmen Dichtung (24) versehen ist.

7. Pneumatischer Rohrvorholer nach einem der Ansprüche 1 bis 6, dadurch gekennzeichnet, daß der als Führung- und Dichtungsfläche ausgebildete Bereich (5.1) des Vorholkolbens (5) gegenüber dem an der Kolbenstange (9) befestigten Bereich (5.2) zum Ventil (6) hin versetzt ausgebildet ist, wodurch bei einer in Richtung (26) zurückgezogenen Kolbenstange (9) das Ventil (6) geöffnet ist und die Buchse (11) von dem versetzten Bereich (22) übergestülpt ist.

8. Pneumatischer Rohrvorholer nach einem der Ansprüche 1 bis 7, dadurch gekennzeichnet, daß der Boden (28) des Speicherraumes (2) mit einer zur Buchse (11) weisenden Aussparung (29) versehen ist, dessen Grundfläche (32) eine Bohrung (30) zur Gasdruckbeaufschlagung einer den Betriebsdruck anzeigenden Anzeigevorrichtung (31) enthält.

**Claims**

1. Pneumatic barrel recuperator for guns, having a recuperator piston (5) connected through a piston rod (9) with the barrel of the gun and movable mounted in a displacement chamber (1), with a self-closing valve (6) which on the forward movement of the barrel is positioned between a storage chamber (2) and the displacement chamber (1) and a throttle device (16, 19, 20, 21) determining the recuperation rate between the displacement chamber (1) and the storage chamber (2), a sealing means being provided to prevent the escape of pressure medium, characterized by the fact that the displacement chamber (1) and the storage chamber (2) have the same internal diameter (d) and are positioned inside only one cylinder (3), the recuperator piston (5) and the valve (6) being mounted displaceable on the internal wall (4) of the cylinder (3).

2. Pneumatic recuperator in accordance with Claim 1, characterized by the fact that the valve (6) is of disc shape and that a zone (6.1) adjacent the inner wall (4) contains one or more interchangeable and low-friction guide elements (7) and an inner zone (6.2) houses a closing device (8) by which, when it bears against a seating (12) situated on a thin-walled bush (11) integral with the cylinder and enclosing the piston rod (9), the storage chamber (2) is limited.

3. Pneumatic recuperator in accordance with Claim 1 and 2, characterized by the fact that the closing device (8) comprises a narrow crosspiece (13) which is directed inwards and which reduces the zone (6.1) and of which the side (14) nearer to the displacement chamber (1) bears radially against an attachment (15) associated with the bush (11) and forming the seating (12) when the valve (6) is closed.

4. Pneumatic recuperator in accordance with any one of Claims 1 to 3, characterized by the fact that in order to obtain a throttle cross-section controlling the recuperation rate of the recuperator piston (5) the bush (11) has, in the zone facing away from the valve (6), a cylindrical hollow space (19) which is open towards the piston rod (9) and which is connected by radial apertures (20) with the storage chamber (2) the piston rod (9) having a cross section (21) which decreases along the displacement chamber (2) towards the piston (17).

5. Pneumatic recuperator in accordance with any one of Claims 1 to 4, characterized by the fact that in order to ensure that the recuperation rate of the recuperator piston (5) will be controlled exclusively by the throttle device (16, 19, 20, 21) the valve is closed off in the zone (6.1) with respect to the inner wall (4) and is provided with a hard wearing seal (18).

6. Pneumatic recuperator in accordance with any one of Claims 1 to 5, characterized by the fact that the zone (22) of the recuperator piston (5) which is adjacent to the inner wall (4) is provided with one or more interchangeable and low-friction guide rings (23) and also with a hard wearing seal (24) requiring little maintenance.

7. Pneumatic recuperator in accordance with any one of Claims 1 to 6, characterized by the fact that zone (5.1) of the recuperator piston (5) which forms a guide and sealing surface is offset towards the valve (6) in relation to the zone (5.1) secured to the piston rod (9) sot that when the piston rod is retracted in the direction (26) the valve (6) is open and the offset zone (22) lies over the bush (11).

8. Pneumatic recuperator in accordance with any one of Claims 1 to 7, characterized by the fact that the base (28) of the storage chamber (2) is provided with a recess (29) which faces the bush (11) and of which the base surface (32) contains a bore (30) to enable an indator device (31) for the operating pressure to be subjected to gas pressure.

**Revendications**

1. Récupérateur pneumatique pour pièces d'artillerie, comportant un piston récupérateur (5) relié par une tige de piston (9) au tube de l'arme et pouvant se déplacer dans une chambre de refoulement (1), muni d'un clapet (6) à fermeture automatique disposé, lors de l'avance du tube, entre une chambre d'accumulation (2) et la chambre de refoulement (1), et d'un dispositif d'étranglement (16 et 19, 20, 21) déterminant la vitesse de récupération entre la chambre de refoulement (1) et la chambre d'accumulation (2), ainsi que des moyens d'étanchéité protégeant le fluide de pression pneumatique des fuites, caractérisé en ce que la chambre de refoulement (1) et la chambre d'accumulation (2) ont le même diamètre inférieur (d) et ne sont disposées qu'à l'intérieur d'un seul cylindre (3), le piston récupérateur (5) et le clapet (6) étant disposés de façon à pouvoir se déplacer sur la paroi intérieure (4) du cylindre (3).

2. Récupérateur pneumatique selon la revendication 1, caractérisé en ce que le clapet (6) a la forme d'un disque et comporte dans la zone (6.1) au contact de la paroi intérieure (4) un ou plusieurs éléments de guidage (7) interchangeables et de faible coefficient de frottement et, dans la zone intérieure (6.2) un organe de fermeture (8) qui, en s'appuyant contre un siège (12) disposé sur une douille (11) à paroi mince, solidaire du cylindre et entourant la tige de piston (9), délimite la chambre d'accumulation (2).

3. Récupérateur pneumatique selon la revendication 1 ou 2, caractérisé en ce que l'organe de fermeture (8) est constitué par une étroite nervure (13) orientée vers l'intérieur et moins large que la zone (6.1), nervure dont le côté (14) tourné vers la chambre de refoulement (1) appuie radialement contre un appendice (15) de la douille (11) constituant le siège (12) lorsque le clapet (6) est fermé.

4. Récupérateur pneumatique selon l'une des revendications 1 à 3, caractérisé en ce que, pour obtenir une section d'étranglement influençant la vitesse de retour vers l'avant du piston récupérateur (5), la douille (11) comporte dans la zone opposée au clapet (6) un volume creux (19) cylindrique ouvert en direction de la tige de piston (9), lequel est relié par des ouvertures radiales (20) avec la chambre d'accumulation (2), et en ce que la tige de piston (9) présente sur la longueur de la chambre de refoulement (2) une section transversale (21) réduite diminuant de façon variable en direction du piston (17).

5. Récupérateur pneumatique selon l'une des revendications 1 à 4, caractérisé en ce que, pour régler la vitesse du retour vers l'avant du piston récupérateur (5) exclusivement par l'intermédiaire du dispositif d'étranglement (16 et 19, 20, 21), le clapet est rendu étanche dans la zone (6.1) par rapport à la paroi intérieure (4) et il est muni d'un joint d'étanchéité (18) résistant à l'usure.

6. Récupérateur pneumatique selon l'une des revendications 1 à 5, caractérisé en ce que la zone (22) du piston récupérateur (5) au contact de la paroi intérieure (4) est munie d'un ou de plusieurs anneaux de guidage (23) interchangeables et de faible coefficient de frottement, ainsi que d'un joint d'étanchéité (24) résistant à l'usure et de peu d'entretien.

7. Récupérateur pneumatique selon l'une des revendications 1 à 6, caractérisé en ce que la zone (5.1) du piston récupérateur (5) réalisée en tant que surface de guidage et d'étanchéité est décalée en direction du clapet (6) par rapport à la zone (5.2) fixée sur la tige de piston (9), d'où il résulte que, lorsque la tige de piston (9) est rétractée dans la direction (26), le clapet (6) est ouvert par la zone décalée (22).

8. Récupérateur pneumatique selon l'une des revendications 1 à 7, caractérisé en ce que le fond (26) de la chambre d'accumulation (2) est muni d'un évidement (29) orienté vers la douille (11), la surface (32) du fond comportant un alésage (30) pour alimenter en pression de gaz un dispositif d'affichage (31) indiquant la pression de service.

FIG.1

FIG.2

0 148 976